# EUROPEAN PATENT APPLICATION

(11) **EP 4 368 670 A1**
(43) Date of publication of application: **15.05.2024**
(21) Application number: 22837465.8
(22) Date of filing: 21.06.2022
(51) Int. Cl.: C08L 33/06, C08K 5/12, C08K 5/20, C08L 71/02

(54) **CURABLE COMPOSITION, CURED PRODUCT, COATING AGENT, AND CONCRETE STRUCTURE**

(30) Priority: 05.07.2021 JP 2021111413
(71) Applicant: Kaneka Corporation, Osaka-shi, Osaka 530-8288 (JP)
(72) Inventor: YANO, Ayako, Takasago-shi, Hyogo 676-8688 (JP); SAKABE, Masaomi, Takasago-shi, Hyogo 676-8688 (JP)
(74) Representative: Vossius & Partner Patentanwälte Rechtsanwälte mbB
(86) International application number: PCT/JP2022/024631
(87) International publication number: WO 2023/282048

(57) **Abstract**

Provided is a curable composition that, while reducing a used amount of (meth)acrylic acid ester monomers having a large number of carbon atoms, yields a cured product which has both good transparency and good elongation. A curable composition in accordance with an aspect of the present invention contains: (A) a silyl group-containing (meth)acrylic-based polymer; (B) a silyl group-containing polyoxyalkylene-based polymer having a number average molecular weight of 20,000 or more; and (C) an aromatic ring-containing plasticizer, wherein units derived from CH₂=C(R¹)(COOR²) (where R¹ is a hydrogen atom or a methyl group, and R² is a group having nine or more carbon atoms) account for 5% by weight or less of all structural units of the (A), the curable composition contains 60 parts by weight or more of the (C) with respect to 100 total parts by weight of the (A) and the (B), and a cured product has a haze of 55 or less, the haze being obtained through a curing test.

## Description

### Technical Field

The present invention relates to a curable composition, a cured product, a coating agent, and a concrete structure.

### Background Art

A curable composition containing a (meth)acrylic-based copolymer and a polyoxyalkylene-based polymer is conventionally known (see, for example, Patent Literature 1). A cured product obtained from such a curable composition is highly weather-resistant and is therefore used as a coating agent for concrete structures such as a bridge and a railway elevation. Coating a concrete structure makes it possible to prevent occurrence of efflorescence and peeling of a concrete piece.

A cured product for use in a coating for a concrete structure preferably has excellent elongation and excellent transparency. The cured product that has good elongation also deforms so as to follow elongation of a concrete base material. This consequently allows the cured product to be highly durable. The cured product that is transparent makes it possible to visually determine a deterioration state of the concrete base material without peeling the coating.

### Citation List

### [Patent Literature]

### [Patent Literature 1]

Japanese Patent Application Publication, Tokukai, No. 2002-294022

### Summary of Invention

### Technical Problem

As a method for improving elongation of a cured product, a method is known in which a high molecular weight polyoxyalkylene-based polymer is used. However, as a result of study by the inventors of the present invention, it has been found that a cured product containing a high molecular weight polyoxyalkylene-based polymer tends to be less transparent.

As a method for improving transparency of a cured product, a method is known in which a (meth)acrylic-based polymer in which (meth)acrylic acid ester having a large number of carbon atoms is used as a monomer. However, (meth)acrylic acid ester having a large number of carbon atoms is expensive. This results in an increase in production cost.

An aspect of the present invention has an object to provide a curable composition that, while reducing a used amount of (meth)acrylic acid ester monomers having a large number of carbon atoms, yields a cured product which has both good transparency and good elongation.

### Solution to Problem

A curable composition in accordance with an aspect of the present invention is a curable composition containing:
(A) a silyl group-containing (meth)acrylic-based polymer;
(B) a silyl group-containing polyoxyalkylene-based polymer having a number average molecular weight of 20,000 or more; and
(C) an aromatic ring-containing plasticizer, wherein
   units derived from CH₂=C(R¹)(COOR²) (where R¹ is a hydrogen atom or a methyl group, and R² is a group having nine or more carbon atoms) account for 5% by weight or less of all structural units of the (A),
   the curable composition contains 60 parts by weight or more of the (C) with respect to 100 total parts by weight of the (A) and the (B), and
   a cured product has a haze of 55 or less, the haze being measured through the following procedure in which:
      1. the curable composition is stretched at 23°C and 50% RH so as to have a thickness of approximately 3 mm, and is cured at 23°C and 50% RH for three days (provided that the curable composition that contains no curing catalyst is cured after 1 part by weight of dibutyltin dilaurate is added with respect to 100 parts by weight of the curable composition);
      2. the curable composition is further cured at 50°C for four days so as to obtain a measured sample;
      3. a haze of the measurement sample is measured in accordance with JIS K 7136; and
      4. the haze is converted into a haze in a 3 mm thickness sample.

### Advantageous Effects of Invention

An aspect of the present invention provides a curable composition that, while reducing a used amount of (meth)acrylic acid ester monomers having a large number of carbon atoms, yields a cured product which has both good transparency and good elongation.

### Description of Embodiments

The following description will discuss an example of an embodiment of the present invention in detail. The present invention is, however, not limited to the embodiment.

Any numerical range expressed as "A to B" herein means "not less than A and not more than B" unless otherwise specified herein. The term "(meth)acrylic" herein means "acrylic" and/or "methacrylic".

A curable composition in accordance with an aspect of the present invention contains the following components (A), (B), and (C). The following description will discuss the components in detail.
The component (A) is a silyl group-containing (meth)acrylic-based polymer.
The component (B) is a silyl group-containing polyoxyalkylene-based polymer having a number average molecular weight of 20,000 or more.
The component (C) is an aromatic ring-containing plasticizer.

### [1. Silyl group-containing (meth)acrylic-based polymer]

A curable composition in accordance with an embodiment of the present invention contains a silyl group-containing (meth)acrylic-based polymer as the component (A).

### [1.1. Main chain of (meth)acrylic-based polymer]

A (meth)acrylic-based polymer contains, in its main chain, a structural unit derived from a (meth)acrylic-based monomer. This structural unit may be derived from only one type of (meth)acrylic-based monomer, or may be derived from a combination of two or more types of (meth)acrylic-based monomers.

Repeating units derived from the (meth)acrylic-based monomer are contained in the (meth)acrylic-based polymer in an amount of preferably 50% by weight or more, more preferably 70% by weight or more, and even more preferably 90% by weight or more of a total weight of the polymer. In a case where the repeating units derived from the (meth)acrylic-based monomer are contained in an amount of 50% by weight or more, good weather resistance and mechanical properties (such as elongation) can be obtained.

The present invention reduces use of a (meth)acrylic-based monomer having a long side chain. The "(meth)acrylic-based monomer having a long side chain" is represented by a formula "CH₂=C(R¹)(COOR²)" where R¹ is a hydrogen atom or a methyl group, and R² is a group having nine or more carbon atoms. A ratio of units derived from the (meth)acrylic-based monomer having a long side chain to all structural units of the (meth)acrylic-based polymer has an upper limit that is 5% by weight or less, preferably 3% by weight or less, and more preferably 1% by weight or less. In an embodiment, the (meth)acrylic-based polymer has no unit derived from the (meth)acrylic-based monomer having a long side chain. The ratio of the units derived from the (meth)acrylic-based monomer having a long side chain to all the structural units of the (meth)acrylic-based polymer has a lower limit that can be 0% by weight or more. In a case where the (meth)acrylic-based monomer having a long side chain is used in a lower amount, production cost of the (meth)acrylic-based polymer can be reduced.

Examples of the (meth)acrylic-based monomer having a long side chain include nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, icosyl (meth)acrylate, docosyl (meth)acrylate, oleyl (meth)acrylate, linoleyl (meth)acrylate, and isobornyl (meth)acrylate.

The (meth)acrylic-based monomer having no long side chain represents a monomer represented by the above formula where R² is a group having 8 or less carbon atoms. Examples of such a monomer include methyl (meth)acrylate, ethyl (meth)acrylate, n-propyl (meth)acrylate, n-butyl (meth)acrylate, isobutyl (meth)acrylate, tert-butyl (meth)acrylate, pentyl (meth)acrylate, n-hexyl (meth)acrylate, cyclohexyl (meth)acrylate, heptyl (meth)acrylate, 2-ethylhexyl (meth)acrylate, octyl (meth)acrylate, 2-methoxyethyl (meth)acrylate, 2-ethoxyethyl (meth)acrylate, 2-butoxyethyl (meth)acrylate, isopropoxyethyl (meth)acrylate, benzyl (meth)acrylate, 2-hydroxyethyl (meth)acrylate, 2-hydroxypropyl (meth)acrylate, 2,2,2-trifluoroethyl (meth)acrylate, glycidyl (meth)acrylate, 1-ethylcyclopentylether (meth)acrylate, and dimethylaminoethyl (meth)acrylate.

Among the monomers listed above, at least one selected from methyl (meth)acrylate, ethyl (meth)acrylate, n-butyl (meth)acrylate, and 2-ethylhexyl (meth)acrylate is preferable. These monomers are procured at low cost and are suitable for a purpose of reducing production cost of the (meth)acrylic-based polymer.

Furthermore, from the viewpoint of a glass transition point, at least one selected from n-butyl acrylate and 2-ethylhexyl acrylate are preferable. The (meth)acrylic-based copolymer obtained from such a monomer has a low glass transition point and a low polymer viscosity. This makes it possible to obtain a curable composition that is easy to use in a low-temperature environment.

The (meth)acrylic-based polymer may be a commercially available product. Examples of a commercially available (meth)acrylic-based polymer include XMAP (registered trademark) SA100S, SA110S, SA120S, and SA410S (all available from KANEKA CORPORATION); ARUFON (registered trademark) US-6100, US-6110, US-6120, US-6130, US-6140, US-6150, US-6170, US-6180, and US-6190 (all available from Toagosei Co., Ltd.); ACTFLOW NE-1000 (registered trademark) (available from Soken Chemical & Engineering Co., Ltd.); and Joncryl (registered trademark) (available from BASF).

### [1.2. Silyl group of (meth)acrylic-based polymer]

In an embodiment, a silyl group of the (meth)acrylic-based polymer is represented by the following general formula (1):

-[Si(R⁴)_{2-b}(Y)_{b}O]ₘ-Si(R⁵)₃₋ₐ(Y)ₐ (1)

In the formula, R⁴ and R⁵ are independently an alkyl group having 1 to 20 carbon atoms, an aryl group having 6 to 20 carbon atoms, an aralkyl group having 7 to 20 carbon atoms, or a triorganosiloxy group represented by (R')₃SiO- (where R' is a monovalent hydrocarbon group having 1 to 20 carbon atoms, and three R' groups present may be identical or different). In a case where two or more R⁴ or R⁵ groups are present, the R⁴ or R⁵ groups may be identical or different.

Y is an alkoxy group having 1 to 20 carbon atoms. In a case where two or more Y groups are present, the Y groups may be identical or different.

a is 0, 1, 2, or 3. b is 0, 1, or 2. m is an integer of 0 to 19. Note, however, that a + mb ≥ 1 is satisfied.

In general, an alkoxy group having fewer carbon atoms is more reactive. In other words, reactivity decreases in the order of a methoxy group, an ethoxy group, and a propoxy group. Thus, an alkoxy group can be selected as appropriate in accordance with a method for producing the (meth)acrylic-based polymer and/or an application of the (meth)acrylic-based polymer.

Specific examples of the silyl group include a dimethoxymethylsilyl group, a trimethoxysilyl group, a diethoxysilyl group, a triethoxysilyl group, a triisopropoxysilyl group, a dimethoxymethylsilyl group, a diethoxymethylsilyl group, and a diisopropoxymethylsilyl group.

The number of silyl groups introduced into the (meth)acrylic-based polymer is preferably at least one or more than one, on average, in a molecule as a whole. In an embodiment, the number of silyl groups is preferably 1.1 or more, and more preferably 1.2 or more. In another embodiment, the number of silyl groups is preferably 2.2 or more, and more preferably 2.4 or more. The number of silyl groups introduced into the (meth)acrylic-based polymer has an upper limit that is preferably 4.0 or less, and more preferably 3.5 or less. In a case where the number of silyl groups is in the above range, a curable composition and a cured product in each of which the (meth)acrylic-based polymer is used have good physical properties.

A position of a silyl group in the (meth)acrylic-based polymer is not particularly limited. In the (meth)acrylic-based polymer, silyl groups may be randomly distributed, or may be localized at a specific place (such as an end portion of a main chain or a molecular end). A silyl group may be located in the main chain of the (meth)acrylic-based polymer, or may be located at the molecular end. The silyl group that is located in the main chain of the (meth)acrylic-based polymer may be located at the end portion of the main chain, or may be located at a portion of the main chain other than the end portion. Note here that the end portion of the main chain represents a portion which is included in 20 mol% or less, 10 mol% or less, or 5 mol% or less of the main chain from either one of ends of the main chain, assuming that a unit constituting the main chain is 100 mol%. The (meth)acrylic-based polymer preferably has a silyl group at the end portion of the main chain and/or a molecular end, and preferably has silyl groups at both the end portion of the main chain and the molecular end. Note, however, that some or all of molecular ends of the (meth)acrylic-based polymer may have no silyl groups.

In an embodiment, the (meth)acrylic-based polymer has an X block in which silyl groups are contained in a relatively large amount and a Y block in which silyl groups are contained in a relatively small amount. The (meth)acrylic-based polymer preferably includes an XY diblock structure or an XYX triblock structure in a molecule.

Note that an entire molecular structure of the (meth)acrylic-based polymer is not particularly limited provided that the XY diblock structure or the XYX triblock structure is included, and may be, for example, an XYXY tetrablock structure. Note here that the "XYX triblock structure" means an "ABA triblock structure" commonly referred to among persons skilled in the art.

The number of repeating units that are derived from a silyl group-containing monomer and that are contained in the X block is preferably more than 1.0, preferably 1.5 or more, and more preferably 1.7 or more, on average. Furthermore, the repeating units that are derived from the silyl group-containing monomer are contained in the X block in an amount of preferably more than 3% by weight, more preferably 4.5% by weight or more, and even more preferably 5% by weight or more, relative to a weight of all repeating units contained in the X block.

In a preferable embodiment, the (meth)acrylic-based polymer is an XYX triblock polymer, and blocks (X blocks) constituting end portions of the (meth)acrylic-based polymer preferably have respective more than one silyl group.

Repeating units that are derived from the silyl group-containing monomer are contained in the Y block in an amount of 0% by weight to 3% by weight, preferably 0% by weight to 2% by weight, and more preferably 0% by weight to 1% by weight, relative to a weight of all repeating units contained in the Y block.

The repeating units derived from the silyl group-containing monomer are localized at an end (one-end or both-end) portion region in the (meth)acrylic-based polymer that has the XY diblock structure or the XYX triblock structure in a molecule.

### [1.3 Other physical properties of (meth)acrylic-based polymer]

In an embodiment, a number average molecular weight of the (meth)acrylic-based polymer has a lower limit that is preferably 1,200 or more, more preferably 5,000 or more, even more preferably 8,000 or more, particularly preferably 10,000 or more, and most preferably 15,000 or more. The number average molecular weight of the (meth)acrylic-based polymer has an upper limit that is preferably 80,000 or less, more preferably 50,000 or less, and even more preferably 40,000 or less. The (meth)acrylic-based polymer that has a number average molecular weight in the above range prevents a curable composition from being too viscous, and makes it possible to ensure sufficient workability.

In an embodiment, the (meth)acrylic-based polymer has a ratio between a weight average molecular weight (Mw) and the number average molecular weight (Mn) (Mw/Mn; molecular weight distribution) of preferably 1.8 or less. The (meth)acrylic-based polymer has a molecular weight distribution of more preferably 1.7 or less, even more preferably 1.6 or less, still more preferably 1.5 or less, particularly preferably 1.4 or less, and most preferably 1.3 or less. A too large molecular weight distribution increases viscosity of a curable composition. Thus, workability tends to decrease.

In the specification of the present application, the weight average molecular weight (Mw) and the number average molecular weight (Mn) are numerical values measured by gel permeation chromatography (GPC). For GPC measurement, tetrahydrofuran can be used as a mobile phase, and a polystyrene gel column can be used as a stationary phase. Furthermore, those molecular weights can be calculated in terms of polystyrene.

The (meth)acrylic-based polymer thus having a small molecular weight distribution can be suitably produced by, for example, living radical polymerization (described later).

### [1.4. Method for producing (meth)acrylic-based polymer]

A method for polymerizing the (meth)acrylic-based polymer is not particularly limited and can be a known polymerization method (such as a radical polymerization method, a cationic polymerization method, or an anionic polymerization method). A polymerization method called solid grade oligomer (SGO; continuous high temperature bulk polymerization) is preferable because the polymerization method is a method that makes it possible to obtain a (meth)acrylic-based polymer with little use of, for example, a polymerization solvent, a polymerization initiator, and a chain transfer agent. A living polymerization method is preferable because the living polymerization method makes it possible to introduce a functional group into an end of a polymer molecule and synthesize a (meth)acrylic-based polymer having a small molecular weight distribution. Examples of the living polymerization method include a living radical polymerization method, a living cationic polymerization method, and a living anionic polymerization method. Among these polymerization methods, the living radical polymerization method is suitable for polymerization of (meth)acrylic-based monomers. Examples of the living radical polymerization method include the following methods.
- Atom transfer radical polymerization (ATRP (see J. Am. Chem. Soc. 1995, 117, 5614; Macromolecules. 1995, 28, 1721))
- Single electron transfer polymerization (SET-LRP (see J. Am. Chem. Soc. 2006, 128, 14156; JPSChem 2007, 45, 1607))
- Reversible chain transfer catalyzed polymerization (RTCP (see "Living Radical Polymerizations with Organic Catalysts", "KOBUNSHI RONBUNSHU (Japanese Journal of Polymer Science and Technology)" 68, 223-231 (2011); Japanese Patent Application Publication, Tokukai, No. 2014-111798))
- Reversible addition/fragmentation chain transfer polymerization method (RAFT polymerization)
- Nitroxy radical method (NMP method)
- Polymerization method using an organotellurium compound (TERP method)
- Polymerization method using an organoantimony compound (SBRP method)
- Polymerization method using an organobismuth compound (BIRP)
- Iodine transfer polymerization method

Examples of a method of introducing a silyl group into the (meth)acrylic-based polymer include a method disclosed in Japanese Patent Application Publication Tokukai No. 2007-302749 and a method disclosed in Japanese Patent Application Publication Tokukai No. 2018-162394. In the method disclosed in Japanese Patent Application Publication Tokukai No. 2007-302749, a silyl group is introduced by converting a functional group at an end of the (meth)acrylic-based polymer. Specifically, a silyl group is introduced by converting a molecular end of the (meth)acrylic-based polymer into a hydroxyl group, an alkenyl group, and a silyl group in this order. In the method disclosed in Japanese Patent Application Publication Tokukai No. 2018-162394, a silyl group is introduced by copolymerization with a silyl group-containing (meth)acrylic acid ester monomer. Specifically, a silyl group is introduced at or near an end of a (meth)acrylic-based polymer molecule by controlling an amount of introduction of the silyl group-containing (meth)acrylic acid ester monomer in accordance with a progress stage of living polymerization. A silyl group-containing (meth)acrylic-based polymer obtained by such a method has a silyl group locally at or near a molecular end. Using such a silyl group-containing (meth)acrylic-based polymer improves elongation of a cured product and is therefore preferable.

The silyl group-containing (meth)acrylic-based polymer may be produced not only by the above-described production method but also by random polymerization. Random polymerization can be carried out by, for example, mixing monomers and a polymerization initiator in a solvent and initiating polymerization. The monomers used in this case are a (meth)acrylic ester monomer, a silyl group-containing (meth)acrylic acid ester monomer, and another monomer as an optional component.

### [2. Silyl group-containing polyoxyalkylene-based polymer]

The curable composition in accordance with an embodiment of the present invention contains a silyl group-containing polyoxyalkylene-based polymer as the component (B).

### [2.1. Main chain of polyoxyalkylene-based polymer]

A polyoxyalkylene-based polymer may have a linear or branched molecular structure. Alternatively, the polyoxyalkylene-based polymer may be a mixture of molecules having such a structure. Among these, a main chain derived from at least one selected from the group consisting of polyoxypropylene diol and polyoxypropylene triol is particularly preferable.

Examples of a main chain structure of the polyoxyalkylene-based polymer include a structure represented by the following general formula (2):

-R⁶-O- (2)

where R⁶ is a divalent alkylene group.

The structure represented by general formula (2) accounts for preferably 50% by weight or more, more preferably 70% by weight or more, and even more preferably 90% by weight or more of a total weight of the polyoxyalkylene-based polymer.

A structure of R⁶ in general formula (2) is not particularly limited provided that R⁶ is a divalent alkylene group. R⁶ is preferably an alkylene group having 1 to 14 carbon atoms, and more preferably a linear or branched alkylene group having 2 to 4 carbon atoms.

A repeating unit represented by general formula (2) is not particularly limited. Specific examples the repeating unit include -CH₂O-, -CH₂CH₂O-, -CH₂CH(CH₃)O-, -CH₂CH(C₂H₅)O-, -CH₂C(CH₃)₂O-, and -CH₂CH₂CH₂CH₂O-. Among these, the main chain of the polyoxyalkylene-based polymer is preferably polypropylene oxide constituted by -CH₂CH(CH₃)O-.

The polyoxyalkylene-based polymer may contain a urethane bond or a urea bond in the main chain structure.

The polyoxyalkylene-based polymer may be a commercially available product. Examples of a commercially available polyoxyalkylene-based polymer include: KANEKA MS POLYMER (registered trademark) S810, S257, and S327 (all available from KANEKA CORPORATION); SILYL (registered trademark) SAX220, SAT400, SAX510, SAX520, SAX580, and SAX750 (all available from KANEKA CORPORATION); Excestar ES-S2410, ES-S2420, and ES-S3630 (all available from AGC Inc.); and HMS-1603 and HMS-1207 (all available from Zhejiang Huangma Technology Co., Ltd.).

Examples of the polyoxyalkylene-based polymers that contains a urethane bond or a urea bond in the main chain structure include: GENIOSIL STP-E10, STP-E15, STP-E30, and STP-E35 (all available from Wacker); Desmoseal S2876, SXP2749, and SXP2774 (all available from Covestro); SPUR+1012, SPUR+1015, SPUR+1050, SPUR+1060, and SPUR+3030 (all available from Momentive); and 12000DS, 30000T, 3368T, 350A, and 120N (all available from Risun Polymer).

### [2.2. Silyl group of polyoxyalkylene-based polymer]

A structure of a silyl group contained in the polyoxyalkylene-based polymer is not particularly limited. The structure of the silyl group contained in the polyoxyalkylene-based polymer may be a structure of the silyl group contained in the (meth)acrylic-based polymer described in [1.2.].

In an embodiment, the structure of the silyl group contained in the polyoxyalkylene-based polymer is represented by the following formula:

-Si(R³)₃₋ₐ(X)ₐ

In the above formula, in a case where a single silyl group contains two or more R³ groups, the two or more R³ groups may be identical or different. R³ may be different for each silyl group, and represents a hydrocarbon group substituted or unsubstituted and having 1 to 20 carbon atoms (the hydrocarbon group that is substituted may be substituted with a hetero atom-containing group). Examples of R³ include an alkyl group having 1 to 20 carbon atoms, an aryl group having 6 to 20 carbon atoms, and an aralkyl group having 7 to 20 carbon atoms. In a case where a single silyl group contains two or more X groups, the two or more X groups may be identical or different. X may be different for each silyl group, and represents a hydroxyl group or a hydrolyzable group. Examples of the hydrolyzable group include an alkoxy group. a is 1, 2, or 3.

Examples of the silyl group contained in the polyoxyalkylene-based polymer include a dimethoxysilyl group, a trimethoxysilyl group, a diethoxysilyl group, a triethoxysilyl group, a triisopropoxysilyl group, a dimethoxymethylsilyl group, a diethoxymethylsilyl group, and a diisopropoxymethylsilyl group.

The number of silyl groups introduced into the polyoxyalkylene-based polymer is preferably more than 1.2, more preferably 1.2 to 4.0, and even more preferably 1.5 to 2.5 per molecule. In a case where the number of silyl groups is in the above range, it is possible to impart good curability to a curable composition.

A silyl group(s) contained in the polyoxyalkylene-based polymer is preferably located at at least one of end portions of a molecule, and more preferably at both of the end portions of the molecule. In a case where a silyl group is located at a molecular end portion, it is possible to impart good elongation to a cured product.

### [2.3. Other physical properties of polyoxyalkylene-based polymer]

A number average molecular weight of the polyoxyalkylene-based polymer has a lower limit that is preferably 20,000 or more, preferably 22,000 or more, even more preferably 25,000 or more, and still more preferably 27,000 or more. The number average molecular weight of the polyoxyalkylene-based polymer has an upper limit that can be, for example, 70,000 or less. By using, as the polyoxyalkylene-based polymer, a high molecular weight polymer having a number average molecular weight of 20,000 or more, it is possible to improve elongation of a cured product.

The polyoxyalkylene-based polymer has a molecular weight distribution that is preferably 1.6 or less, more preferably 1.5 or less, and even more preferably 1.2 or less. A too large molecular weight distribution increases viscosity of a curable composition. Thus, workability tends to decrease.

In the specification of the present application, the weight average molecular weight (Mw) and the number average molecular weight (Mn) are numerical values measured by gel permeation chromatography (GPC). For GPC measurement, tetrahydrofuran can be used as a mobile phase, and a polystyrene gel column can be used as a stationary phase. Furthermore, those molecular weights can be calculated in terms of polystyrene.

### [2.4. Method for producing polyoxyalkylene-based polymer]

The polyoxyalkylene-based polymer can be synthesized by an ordinary polymerization method (anionic polymerization method with use of caustic alkali). Furthermore, the polyoxyalkylene-based polymer can also be synthesized by a method with use of a cesium metal catalyst, a porphyrin/aluminum complex catalyst (see, for example, Japanese Patent Application Publication, Tokukaisho, No. 61-197631, Japanese Patent Application Publication, Tokukaisho, No. 61-215622, Japanese Patent Application Publication, Tokukaisho, No. 61-215623, and Japanese Patent Application Publication, Tokukaisho, No. 61-218632), a composite metal cyanide complex catalyst (for example, Japanese Patent Publication, Tokukousho, No. 46-27250 and Japanese Patent Publication, Tokukousho, No. 59-15336), and a catalyst containing polyphosphazene salt (see, for example, Japanese Patent Application Publication Tokukaihei No. 10-273512).

By employing a method with use of a porphyrin/aluminum complex catalyst, a composite metal cyanide complex catalyst, or a catalyst containing polyphosphazene salt, it is possible to obtain a polyoxyalkylene-based polymer having a small molecular weight distribution.

A method for introducing a silyl group into the polyoxyalkylene-based polymer may be a conventionally known method. For example, Japanese Patent Application Publication Tokukaihei No. 3-72527 can be referred to for introduction of a silyl group into an oxyalkylene polymer that is obtained with use of a composite metal cyanide complex catalyst. Furthermore, Japanese Patent Application Publication Tokukaihei No. 11-60723 can be referred to for introduction of a silyl group into an oxyalkylene polymer that is obtained by using polyphosphazene salt and active hydrogen as a catalyst.

Other examples of the method for introducing a silyl group into the polyoxyalkylene-based polymer include the following methods (1) to (3):
(1) An oxyalkylene polymer having a functional group such as a hydroxyl group at its end(s) and an organic compound having (a) an active group reactive with the functional group and (b) an unsaturated group are reacted so as to obtain an unsaturated group-containing oxyalkylene polymer. Alternatively, an oxyalkylene polymer having a functional group such as a hydroxyl group at its end(s) is copolymerized with an unsaturated group-containing epoxy compound so as to obtain an unsaturated group-containing oxyalkylene polymer. Subsequently, silyl group-containing hydrosilane is caused to act on a resulting reaction product so as to hydrosilylate the resulting reaction product.
(2) An unsaturated group-containing oxyalkylene polymer obtained as in the case of (1) is reacted with a compound containing a mercapto group and a silyl group.
(3) An oxyalkylene polymer having a Y functional group at its end(s) is reacted with a compound containing a Y' functional group and a silyl group. Note here that the Y functional group is, for example, a hydroxyl group, an epoxy group, or an isocyanate group. The Y' functional group is a functional group that is reactive with the Y functional group.

In the above method (1), a transition metal catalyst is ordinarily used to add a silyl group-containing hydrosilane compound to an alkenyl group. Examples of the transition metal catalyst include a platinum-based catalyst. Examples of the platinum-based catalyst include: platinum simple substance; a catalyst obtained by dispersing platinum solids into a carrier; chloroplatinic acid; a complex of chloroplatinic acid and, for example, alcohol, aldehyde, or ketone; a platinum-olefin complex; and a platinum (0)-divinyltetramethyldisiloxane complex. Examples of a catalyst different from the platinum-based catalyst include RhCl(PPh₃)₃, RhCl₃, RuCl₃, IrCl₃, FeCl₃, AlCl₃, PdCl₂·H₂O, NiCl₂, and TiCl₄.

Examples of the compound containing a Y' functional group and a silyl group and usable in the above method (3) include amino-group-containing silanes (such as γ-aminopropyltrimethoxysilane), mercapto-group-containing silanes (such as γ-mercaptopropyltrimethoxysilane), epoxysilanes (such as γ-glycidoxypropyltrimethoxysilane), vinylically-unsaturated-group-containing silanes (such as vinyltrimethoxysilane), chlorine-atom-containing silanes (such as γ-chloropropyltrimethoxysilane), isocyanate-containing silanes (such as γ-isocyanatepropyltrimethoxysilane), and hydrosilanes (such as methyldimethoxysilane).

### [3. Aromatic ring-containing plasticizer]

The curable composition in accordance with an embodiment of the present invention contains, as the component (C), an aromatic ring-containing plasticizer. Using an aromatic ring-containing plasticizer as a plasticizer makes it possible to improve transparency of a cured product.

In an embodiment, the aromatic ring-containing plasticizer is a benzene ring-containing plasticizer. In an embodiment, the aromatic ring-containing plasticizer is at least one selected from the group consisting of aromatic acid ester and aromatic acid amide. "Acid" in referring to "acid ester" and "acid amide" herein includes not only carboxylic acid but also an acid other than carboxylic acid. Examples of the acid other than carboxylic acid include sulfonic acid and phosphoric acid. Thus, the aromatic acid ester includes, for example, aromatic carboxylic acid ester, aromatic sulfonic acid ester, and aromatic phosphate ester. The aromatic acid amide includes, for example, aromatic carboxylic acid amide, aromatic sulfonic acid amide, and aromatic phosphoric amide.

Examples of the aromatic acid ester include phthalate esters (such as dibutyl phthalate, diheptyl phthalate, di(2-ethylhexyl)phthalate, diisodecyl phthalate, diisononyl phthalate, and butylbenzyl phthalate), and trimellitic acid esters (such as tributyl trimellitate and tris(2-ethylhexyl)trimellitate).

Examples of the aromatic acid amide include benzenesulfonamides (such as N-butylbenzenesulfonamide, p-toluenesulfonamide, N -ethyl-toluene sulfonamide, and N-cyclohexyl-toluenesulfonamide).

### [4. Other additives]

The curable composition in accordance with an embodiment of the present invention may contain various additives in addition to the (meth)acrylic-based polymer, the polyoxyalkylene-based polymer, and the aromatic ring-containing plasticizer, which are described above. In a case where the curable composition contains these additives, it is possible to adjust various physical properties of the curable composition and a cured product. Examples of the additives include those listed below. These additives may be used alone or in combination of two or more.

### (Filler)

The curable composition in accordance with an embodiment of the present invention may contain a filler.

Examples of the filler include silica (such as fumed silica, precipitated silica, crystalline silica, fused silica, dolomite, silicic anhydride, and hydrous silicic acid) and fibrous fillers (such as glass fibers and glass filaments).

The filler is contained in an amount of preferably 0 part by weight to 500 parts by weight, more preferably 1 part by weight to 200 parts by weight, and particularly preferably 2 parts by weight to 50 parts by weight, with respect to 100 total parts by weight of the (meth)acrylic-based polymer and the polyoxyalkylene-based polymer.

### (Curing catalyst)

The curable composition in accordance with an aspect of the present invention can be crosslinked and cured by using a known curing catalyst to form a siloxane bond. The curing catalyst herein generally represents a substance that catalyzes formation of a siloxane bond by condensation of silyl groups. Examples of the curing catalyst include a tin-based curing catalyst and a non-tin-based curing catalyst.

Specific examples of the tin-based curing catalyst include dialkyltin carboxylates (such as dibutyltin dilaurate, dibutyltin diacetate, dibutyltin diethylhexanoate, dibutyltin dioctate, dibutyltin dimethylmaleate, dibutyltin diethylmaleate, dibutyltin dibutylmaleate, dibutyltin diisooctyl maleate, dibutyltin ditridecyl maleate, dibutyltin dibenzyl maleate, dibutyltin maleate, dioctyltin diacetate, dioctyltin distearate, dioctyltin dilaurate, dioctyltin diethylmaleate, and dioctyltin diisooctyl maleate); dialkyltin oxides (such as dibutyltin oxide, dioctyltin oxide, and a mixture of dibutyltin oxide and phthalate ester); reactants of tetravalent tin compounds (such as dialkyltin oxide and dialkyltin diacetate) and alkoxysilyl group-containing low molecular weight silicon compounds (such as tetraethoxysilane, methyltriethoxysilane, diphenyldimethoxysilane, and phenyltrimethoxysilane); divalent tin compounds (such as tin octylate, tin naphthenate, and tin stearate); monoalkyltins (such as monobutyltin compounds (such as monobutyltin trisoctoate and monobutyltin triisopropoxide), and monooctyltin compounds); reactants or mixtures of amine-based compounds and organotin compounds (such as reactants or mixtures of laurylamine and tin octylate); chelate compounds (such as dibutyltin bisacetylacetonate, dioctyltin bisacetylcetonate, dibutyltin bisethylacetate, dioctyltin bisethylacetonate); and tin alcoholates (such as dibutyltin dimethylate, dibutyltin diethylate, dioctyltin dimethylate, and dioctyltin diethylate).

Among these, a mixture of dibutyltin oxide and phthalate ester and a reactant of dibutyltin oxide and tetraethoxysilane are preferable because the mixture and the reactant have high activity as silanol condensation catalysts and are less likely to color a cured product. Furthermore, dibutyltin dilaurate is preferable because dibutyltin dilaurate is less likely to color a cured product even when added to a curable composition, is inexpensive, and is easy to obtain. A chelate-containing tin compound (such as dibutyltin bisacetylacetonate) tends to color a cured product in yellow or orange. As such, the chelate-containing tin compound is preferably used in a smaller amount or unused.

The tin-based curing catalyst is contained in an amount of preferably 0.1 parts by weight to 20 parts by weight, and more preferably 0.5 parts by weight to 10 parts by weight, with respect to 100 total parts by weight of the (meth)acrylic-based polymer and the polyoxyalkylene-based polymer.

Examples of the non-tin-based curing catalyst include potassium-based curing catalysts (such as potassium neodecanate and potassium octylate); titanium compounds (such as tetrabutyltitanate, tetrapropyltitanate, titaniumtetrakis(acetylacetonate), bis(acetylacetonate) diisopropoxytitanium, and diisopropoxytitanium bis(ethylacetocetate)); organoaluminum compounds (such as aluminumtris(acetylacetonate), aluminumtris(ethylacetoacetate), and diisopropoxy aluminum ethylacetoacetate); zirconium compounds (such as zirconium tetrakis(acetylacetonate); and bismuth compounds (such as bismuth octoate and bismuth neodecanoate). A potassium-based curing catalyst is preferable because the potassium-based curing catalyst makes it possible to improve transparency of a cured product.

Alternatively, the non-tin-based curing catalyst may be an amidine compound (see, for example, International Publication No. WO 2008/078654). Examples of the amidine compound include: 1-(o-tolyl)biguanide, 1-phenylguanidine, 1,2-dimethyl-1,4,5,6-tetrahydropyrimidine, 1,5,7-triazabicyclo[4.4.0]deca-5-ene, and 7-methyl-1,5,7-triazabicyclo[4.4.0]deca-5-ene.

The non-tin-based curing catalyst is contained in an amount of preferably 0.5 parts by weight to 20 parts by weight, and more preferably 1 part by weight to 10 parts by weight, with respect to 100 total parts by weight of the (meth)acrylic-based polymer and the polyoxyalkylene-based polymer.

### (Dehydrating agent)

In a case where the curable composition in accordance with an embodiment of the present invention is worked as a one-component curable composition, it is preferable that (i) moisture-containing components be dehydrated and dried prior to use, or (ii) a composition be dehydrated during mixing and kneading of components by, for example, heating and pressure reduction. From this viewpoint, it is preferable to add a dehydrating agent to the curable composition.

Specific examples of the dehydrating agent include an alkoxysilane compound. The alkoxysilane compound dehydrates a composition by reacting with water. Examples of the alkoxysilane compound include n-propyltrimethoxysilane, vinyl trimethoxysilane, vinylmethyldimethoxysilane, methyl silicate, ethyl silicate, γ-mercaptopropylmethyldimethoxysilane, γ-mercaptopropylmethyldiethoxysilane, γ-glycidoxypropyltrimethoxysilane, and methylcarbamate methyltrimethoxysilane. Among these, vinyltrimethoxysilane and methylcarbamate methyltrimethoxysilane have high dehydration effects and can be suitably used.

The dehydrating agent (in particular, the alkoxysilane compound that can react with water, such as vinyltrimethoxysilane) is contained in an amount of preferably 2 parts by weight to 15 parts by weight, and more preferably 3 parts by weight to 10 parts by weight, with respect to 100 total parts by weight of the (meth)acrylic-based polymer and the polyoxyalkylene-based polymer.

### (Adhesiveness imparting agent)

An adhesiveness imparting agent may be added to the curable composition in accordance with an embodiment of the present invention. Adding the adhesiveness imparting agent makes it possible to reduce a risk of separation of a cured product from an adherend such as concrete. Furthermore, it may be unnecessary to use a primer for improving adhesiveness. In this case, construction work is expected to be simplified.

Examples of the adhesiveness imparting agent include a silane coupling agent. Specific examples of the silane coupling agent include isocyanate-group-containing silanes (such as γ-isocyanatepropyltrimethoxysilane, γ-isocyanatepropyltriethoxysilane, γ-isocyanatepropylmethyldiethoxysilane, and γ-isocyanatepropylmethyldimethoxysilane); amino-group-containing silanes (such as γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, N-(β-aminoethyl)-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane); mercapto-group-containing silanes (such as γ-mercaptopropyltrimethoxysilane, γ-mercaptopropyltriethoxysilane, γ-mercaptopropylmethyldimethoxysilane, and γ-mercaptopropylmethyldiethoxysilane); epoxy-group-containing silanes (such as γ-glycidoxypropyltrimethoxysilane, γ-glycidoxypropyltriethoxysilane, γ-glycidoxypropylmethyldimethoxysilane, 2-(3,4-epoxycyclohexyl)ethyltrimethoxysilane, and 2-(3,4-epoxycyclohexyl)ethyltriethoxysilane); carboxy silanes (such as β-carboxyethyltriethoxysilane, β-carboxyethylphenylbis(2-methoxyethoxy) silane, and N-(β-carboxymethyl)aminoethyl-γ-aminopropyltrimethoxysilan e); vinylically-unsaturated-group-containing silanes (such as vinyl trimethoxysilane, vinyl triethoxysilane, γ-methacryloyloxypropylmethyldimethoxysilane, and γ-acroyloxypropylmethyltriethoxysilane); halogen-containing silanes (such as γ-chloropropyltrimethoxysilane); and isocyanurate silanes (such as tris(trimethoxysilyl)isocyanurate). Moreover, an amino-modified silyl polymer, a silylated amino polymer, an unsaturated aminosilane complex, a phenylamino long-chain alkylsilane, an aminosilylated silicone, a silylated polyester, and the like, which are derivatives obtained by modifying a silane coupling agent, can also be used as the silane coupling agent.

The adhesiveness imparting agent is contained in an amount of preferably 0.1 parts by weight to 20 parts by weight, and more preferably 0.5 parts by weight to 10 parts by weight, with respect to 100 total parts by weight of the (meth)acrylic-based polymer and the polyoxyalkylene-based polymer.

### (Physical property adjusting agent)

The curable composition in accordance with an embodiment of the present invention may contain a physical property adjusting agent for adjusting tensile properties of a cured product. Using the physical property adjusting agent makes it possible to increase hardness of the cured product or, conversely, to lower the hardness so as to elongate the cured product.

Examples of the physical property adjusting agent include alkylalkoxysilanes (such as methyltrimethoxysilane, dimethyldimethoxysilane, trimethylmethoxysilane, and n-propyltrimethoxysilane); alkylisopropenoxysilanes (such as dimethyldiisopropenoxysilane, methyltriisopropenoxysilane, and γ-glycidoxypropylmethyldiisopropenoxysilane); alkoxysilanes having a functional group (such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane); silicone varnishes; and polysiloxanes.

The physical property adjusting agent is contained in an amount of preferably 0.1 parts by weight to 80 parts by weight, and more preferably 0.1 parts by weight to 50 parts by weight, with respect to 100 total parts by weight of the (meth)acrylic-based polymer and the polyoxyalkylene-based polymer.

### (Thixotropy imparting agent (anti-sagging agent))

The curable composition in accordance with an embodiment of the present invention may contain a thixotropy imparting agent (anti-sagging agent) in order to prevent sagging and to improve workability.

Examples of the thixotropy imparting agent include polyamide waxes, hydrogenated castor oil derivatives, and silicas.

The thixotropy imparting agent is contained in an amount of preferably 0.1 parts by weight to 50 parts by weight, and more preferably 0.2 parts by weight to 25 parts by weight, with respect to 100 total parts by weight of the (meth)acrylic-based polymer and the polyoxyalkylene-based polymer.

### (Photocurable substance)

The curable composition in accordance with an embodiment of the present invention may contain a photocurable substance. The photocurable substance is a substance which causes a chemical change by light irradiation in a short period of time and in which a change in physical property (e.g., curing) occurs by the chemical change. The curable composition that contains the photocurable substance makes it possible to reduce stickiness (residual tack) on a cured product surface. A typical photocurable substance can be cured by, for example, being left to stand at room temperature at a sunny place (e.g., near a window) in a room for 1 day. There are many known examples of the photocurable substance, such as organic monomers, oligomers, resins, and compositions containing any of these. A type of the photocurable substance is not particularly limited. Examples of the photocurable substance include unsaturated acrylic compounds, polyvinyl cinnamates, and azidated resins.

Specific examples of the unsaturated acrylic compound include (meth)acrylic esters of low molecular weight alcohols (such as ethylene glycol, glycerin, trimethylolpropane, pentaerythritol, neopentyl alcohol); (meth)acrylic esters of alcohols in which an acid (bisphenol A, isocyanuric acid), a low molecular weight alcohol, or the like is modified with ethylene oxide, propylene oxide, or the like; (meth)acrylic esters (such as polyether polyol the main chain of which is polyether and which has a hydroxyl group at its end(s), polymer polyol obtained by radical polymerization of a vinyl-based monomer in polyol the main chain of which is polyether, polyester polyol the main chain of which is polyester and which has a hydroxyl group at its end(s), and polyol the main chain of which is a vinyl-based or (meth)acrylic copolymer and which has a hydroxyl group in the main chain); epoxy acrylate-based oligomers obtained by reacting an epoxy resin (such as of bisphenol A type or novolac type) with (meth)acrylic acid; urethane acrylate-based oligomers having a urethane bond and a (meth)acrylic group in a molecular chain obtained by reacting polyol, polyisocyanate, a hydroxyl group-containing (meth)acrylate, or the like.

The photocurable substance is contained in an amount of preferably 0.01 parts by weight to 30 parts by weight with respect to 100 total parts by weight of the (meth)acrylic-based polymer and the polyoxyalkylene-based polymer.

### (Air oxidation-curable substance)

The curable composition in accordance with an embodiment of the present invention may contain an air oxidation-curable substance. The air oxidation-curable substance refers to a compound that has an unsaturated group and that can be crosslinked and cured by oxygen in the air. The curable composition that contains the air oxidation-curable substance makes it possible to reduce stickiness (residual tack) on a cured product surface. A typical air oxidation-curable substance can be cured by, for example, being left to stand in the air in a room for 1 day.

Examples of the air oxidation-curable substance include dry oils (such as tung oil and linseed oil); various alkyd resins obtained by modifying dry oils; substances obtained by modifying an acrylic polymer, an epoxy-based resin, a silicone resin, or the like with dry oil; 1,2-polybutadiene; 1,4-polybutadiene; polymers or copolymers of C5-C8 dienes; various modified products of polymers or copolymers of C5-C8 dienes (such as a maleated modified product and a boiled oil modified product). Among those listed above, tung oil, a diene-based polymer in liquid form, and a modified product of the diene-based polymer are preferable.

The air oxidation-curable substance is contained in an amount of preferably 0.01 parts by weight to 30 parts by weight with respect to 100 total parts by weight of the (meth)acrylic-based polymer and the polyoxyalkylene-based polymer.

### (Antioxidant and photo stabilizer)

The curable composition in accordance with an embodiment of the present invention may contain an antioxidant and/or a photo stabilizer. Various types of antioxidants and photo stabilizers are known. For example, it is possible to list substances disclosed in, for example, ["SANKABOUSHIZAI HANDBOOK (Antioxidant Handbook)" by Kenichi Saruwatari, et al., Taiseisha, 1976] and ["KOUBUNSHIZAIRYOU NO REKKA TO ANTEIKA (Deterioration and Stabilization of Polymer Materials)" supervised by Zenjiro Osawa, CMC Publishing Co., Ltd., 1990, pp. 235-242].

Examples of the antioxidant include thioether-based antioxidants such as ADK STAB PEP-36 and ADK STAB AO-23 (which are all available from ADEKA CORPORATION); phosphorus-based antioxidants such as Irgafos38, Irgafos168, and IrgafosP-EPQ (which are all available from BASF); and hindered phenol-based antioxidants. Among those listed above, a hindered phenol-based antioxidant is preferable.

Specific examples of the hindered phenol-based antioxidant include 2,6-di-t-butyl-4-methylphenol, 2,6-di-t-butyl-4-ethylphenol, mono (or di or tri) (a methylbenzyl) phenol, 2,2'-methylenebis(4ethyl-6-t-butylphenol), 2,2'-methylenebis(4methyl-6-t-butylphenol), 4,4'-butylidenebis(3-methyl-6-t-butylphenol), 4,4'-thiobis(3-methyl-6-t-butylphenol), 2,5-di-t-butyl hydroquinone, 2,5-di-t-amyl hydroquinone, triethylene glycol-bis-[3-(3-t-butyl-5-methyl-4hydroxyphenyl)propionate], 1,6-hexanediol-bis[3-(3,5-di-t-butyl-4-hydroxyphenyl)propiona te], 2,4-bis-(n-octylthio)-6-(4-hydroxy-3,5-di-t-butylanilino)-1,3,5-triazine, pentaerythrityl-tetrakis[3-(3,5-di-t-butyl-4-hydroxyphenyl)pro pionate], 2,2-thio-diethylenebis[3-(3,5-di-t-butyl-4-hydroxyphenyl)propi onate], octadecyl-3-(3,5-di-t-butyl-4-hydroxyphenyl)propionate, N,N'-hexamethylene bis(3,5-di-t-butyl-4-hydroxy-hydrocinnamamide), 3,5-di-t-butyl-4-hydroxy-benzylphosphonate-diethyl ester, 1,3,5-trimethyl-2,4,6-tris(3,5-di-t-butyl-4-hydroxybenzyl)benz ene, bis(ethyl 3,5-di-t-butyl-4-hydroxybenzylphosphonate)calcium, tris-(3,5-di-t-butyl-4-hydroxybenzyl)isocyanurate, 2,4-bis[(octylthio)methyl]o-cresol, N,N'-bis[3-(3,5-di-t-butyl-4-hydroxyphenyl)propionyl]hydrazin e, tris (2,4-di-t-butylphenyl)phosphite, 2-(5-methyl-2-hydroxyphenyl)benzotriazole, 2-[2-hydroxy-3,5-bis(a,a-dimethylbenzyl)phenyl]-2H-benzotria zole, 2-(3,5-di-t-butyl-2-hydroxyphenyl) benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl) benzotriazole, 2-(2'-hydroxy-5'-t-octylphenyl)-benzotriazole, a methyl-3-[3-t-butyl-5-(2H-benzotriazol-2-yl)-4-hydroxyphenyl] propionate-polyethylene glycol condensate (with a molecular weight of approximately 300), a hydroxyphenylbenzotriazole derivative, 2-(3,5-di-t-butyl-4-hydroxybenzyl)-2-n-butylmalonate bis(1,2,2,6,6-pentamethyl-4-piperidyl), and 2,4-di-t-butylphenyl-3,5-di-t-butyl-4-hydroxybenzoate.

Examples of commercially available antioxidants include NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, NOCRAC DAH (which are all available from Ouchi Shinko Chemical Industrial Co., Ltd.); ADK STAB AO-30, ADK STAB AO-40, ADK STAB AO-50, ADK STAB AO-60, ADK STAB AO-616, ADK STAB AO-635, ADK STAB AO-658, ADK STAB AO-80, ADK STAB AO-15, ADK STAB AO-18, ADK STAB 328, ADK STAB AO-37 (which are all available from ADEKA CORPORATION); IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, IRGANOX-1425WL (which are all available from BASF); and SumilizerGM, SumilizerGA-80, and SumilizerGS (which are all available from SUMITOMO CHEMICAL COMPANY, LIMITED).

Examples of the photo stabilizer include benzotriazole-based compounds such as UV absorbents (Tinuvin P, Tinuvin 234, Tinuvin 320, Tinuvin 326, Tinuvin 327, Tinuvin 329, Tinuvin 213, which are all available from BASF); triazine-based photo stabilizers such as Tinuvin 1577; benzophenone-based compounds such as CHIMASSORB81; benzoate-based compounds such as Tinuvin 120 (available from BASF); and hindered amine-based compounds). Among those listed above, a benzotriazole-based compound and a hindered amine-based compound are preferable.

Specific examples of the hindered amine-based compound include a dimethyl-1-(2-hydroxyethyl)-4-hydroxy-2,2,6,6-tetramethylpip eridine succinate polycondensate, poly[{6-(1,1,3,3-tetramethylbutyl)amino-1,3,5-triazine-2,4-diyl }{(2,2,6,6-tetramethyl-4-piperidyl)imino}], an N,N'-bis(3aminopropyl)ethylenediamine-2,4-bis[N-butyl-N-(1,2 ,2,6,6-pentamethyl-4-piperidyl)amino]-6-chloro-1,3,5-triazine condensate, bis(2,2,6,6-tetramethyl-4-piperidyl)sebacate, and bis(2,2,6,6-tetramethyl-4-piperidinyl)ester succinate.

Examples of commercially available photo stabilizers include Tinuvin 622LD, Tinuvin 144, Tinuvin 770, Tinuvin 765, Tinuvin 123, CHIMASSORB944LD, and CHIMASSORB119FL (which are all available from BASF); and ADK STAB LA-52, ADK STAB LA-57, ADK STAB LA-62, ADK STAB LA-67, ADK STAB LA-63, ADK STAB LA-68, ADK STAB LA-82, and ADK STAB LA-87 (which are all available from ADEKA CORPORATION).

The antioxidant and the photo stabilizer may be used in combination. Using the antioxidant and the photo stabilizer in combination may further improve respective effects thereof and improve, for example, heat resistance and weather resistance of a cured product. For example, in order to improve weather resistance, it is possible to combine a UV absorbent and a hindered amine-based compound (HALS). Such combination makes it possible to further improve respective effects of those agents and is therefore preferable.

The antioxidant and/or the photo stabilizer is/are preferably contained in an amount of preferably 0.1 parts by weight to 20 parts by weight with respect to 100 total parts by weight of the (meth)acrylic-based polymer and the polyoxyalkylene-based polymer.

### [5. Curable composition]

The curable composition in accordance with an embodiment of the present invention contains the components (A), (B), and (C) described above. The curable composition in accordance with an embodiment of the present invention can be prepared by mixing the components (A), (B), and (C) as appropriate.

### [5.1. Makeup and physical properties of curable composition]

In the curable composition, the polyoxyalkylene-based polymer is contained in an amount whose lower limit is preferably 5 parts by weight or more, more preferably 30 parts by weight or more, and even more preferably 40 parts by weight or more, assuming that the (meth)acrylic-based polymer is contained in an amount of 100 parts by weight. The polyoxyalkylene-based polymer is contained in an amount whose upper limit is preferably 300 parts by weight or less, more preferably 280 parts by weight or less, and even more preferably 250 parts by weight or less, assuming that the (meth)acrylic-based polymer is contained in an amount of 100 parts by weight. The (meth)acrylic-based polymer and the polyoxyalkylene-based polymer that are contained in a ratio in the above range make it possible to obtain a cured product having excellent weather resistance. In order to achieve longer-term weather resistance, the (meth)acrylic-based polymer is preferably contained in a larger amount than the polyoxyalkylene-based polymer.

In the curable composition, the aromatic ring-containing plasticizer is contained in an amount whose lower limit is preferably 60 parts by weight or more, more preferably 65 parts by weight or more, and even more preferably 70 parts by weight or more, assuming that a total of the (meth)acrylic-based polymer and the polyoxyalkylene-based polymer is 100 parts by weight. The aromatic ring-containing plasticizer is contained in an amount whose upper limit is preferably 300 parts by weight or less, and more preferably 150 parts by weight or less, assuming that the total of the (meth)acrylic-based polymer and the polyoxyalkylene-based polymer is 100 parts by weight. In a case where the aromatic ring-containing plasticizer is contained in an amount of 60 parts by weight or more, it is possible to improve transparency of a cured product. In a case where the aromatic ring-containing plasticizer is contained in an amount of 300 parts by weight or less, a resulting cured product will have practical strength.

The curable composition contains components that are preferably compatible with each other. The expression "components are compatible with each other" herein means that after a sufficient amount of time (e.g., three days) has elapsed since preparation, no boundary line resulting from separation of the components is observed in the curable composition. For a more specific method for evaluating compatibility, see Examples described later. The curable composition whose components are compatible with each other is a homogeneous composition. This easily allows a cured product to have stable properties.

In the curable composition in accordance with an embodiment of the present invention, a cured product has a haze of 55 or less, more preferably 40 or less, and even more preferably 30 or less, the haze being obtained by subjecting the curable composition to the following curing test. The haze of the cured product, the haze being obtained by subjecting the curable composition to the curing test, has a lower limit that may be 0 or more, or 10 or more. From a curable composition that satisfies such a condition, a cured product having high transparency tends to be obtained. 1. The curable composition is stretched at 23°C and 50% RH so as to have a thickness of approximately 3 mm, and is cured at 23°C and 50% RH for three days. However, in a case where the curable composition contains no curing catalyst (e.g., a case where the curable composition is a main agent of a two-component curable composition), such a curable composition alone is not cured. Thus, the curable composition is cured after 1 part by weight of dibutyltin dilaurate is added with respect to 100 parts by weight of the curable composition. The "curing catalyst" herein generally represents a substance that catalyzes formation of a siloxane bond by condensation of silyl groups.
2. The curable composition is further cured at 50°C for four days so as to obtain a measured sample.
3. A haze of the measurement sample is measured in accordance with JIS K 7136.
4. The haze is converted into a haze in a 3 mm thickness sample.

### [5.2. Form and application of curable composition]

The curable composition in accordance with an embodiment of the present invention may be a one-component curable composition, or may be a two-component or multi-component curable composition. A one-component curable composition is a curable composition in which all components are mixed in advance and then stored in a sealed state. The one-component curable composition cures at room temperature by moisture in the air after being used. In contrast, in a case where the curable composition is a two-component or multi-component curable composition, a curing agent containing a curing catalyst is separately prepared. The two-component curable composition is used by mixing the curing agent with a composition containing the (meth)acrylic-based polymer and the polyoxyalkylene-based polymer. The multi-component curable composition is used by mixing the curing agent with a composition containing the (meth)acrylic-based polymer and the polyoxyalkylene-based polymer, and, optionally, other agent(s) (such as a coloring agent).

In a case where the curable composition is prepared as the two-component curable composition, a coloring agent can be further added during mixing of two components. For example, the coloring agent that is obtained by mixing a pigment, a plasticizer, and, if necessary, a filler, and forming a resulting mixture into paste is preferable due to its high workability.

Furthermore, in the case of the two-component curable composition, a retarder can be added during mixing of the two components. This makes it possible to finely adjust a curing rate at a work site.

Application of the curable composition is not particularly limited. Examples of the application include sealing materials (for, for example, architectural and industrial applications), materials for electrical and electronic components (such as a solar cell backside sealant), electrical insulating materials (such as insulating covering materials for electric wires and cables), an adhesive, adhesive agents (such as an elastic adhesive agent, a contact adhesive agent, and an adhesive agent for tiles), a paint, a coating material, sealing materials such as a can lid, a potting agent for electrical and electronic applications, a film, a gasket, a casting material, various molding materials, artificial marble, rust-proof and/or water-proof sealing materials for cut sections of wired glass and laminated glass, and a waterproofing agent.

Examples of a method of applying the curable composition include hand application (with use of a trowel or the like), bead application, and application with a roller or a spray. In order to achieve higher strength, it is preferable to coat the curable composition so as to obtain a cured product having a thickness of 2 mm to 20 mm. In this case, the curable composition is preferably adjusted so as to have a viscosity at a certain level or higher. In contrast, in a case where a complex surface is to be coated or in a case where workability is desired to be increased, it is preferable to use a low-viscosity curable composition to carry out spray coating. In this case, carrying out spray coating several times enables the thickness of a resulting cured product to be adjusted to a desired thickness and is therefore preferable.

Among those listed above, the curable composition in accordance with an embodiment of the present invention is particularly useful as a coating agent for a concrete structure. A cured product that is used to coat the concrete structure preferably simultaneously has weather resistance, transparency, and elongation. A cured product obtained from the curable composition in accordance with an embodiment of the present invention simultaneously has the above features and is therefore suitable to be used to coat a concrete structure.

An aspect of the present invention contains a coating agent for a concrete structure, the coating agent containing the curable composition described above.

During application of a coating agent for a concrete structure to a concrete structure, in order to improve adhesiveness, it is preferable to apply a primer to the concrete structure and then apply the coating agent to the concrete structure. The primer used in this case is preferably a primer that becomes transparent after curing and does not lose a transparent appearance even after the coating agent is applied.

In an embodiment, not only the coating agent in accordance with an embodiment of the present invention but also other curable resin(s) may be applied to the concrete structure. Other curable resin(s) may be contained as component(s) of the coating agent in accordance with an embodiment of the present invention. Alternatively, other curable resin(s) may be applied to the concrete structure separately from the coating agent in accordance with an embodiment of the present invention. Furthermore, other member(s) (such as a net and/or reinforcing cloth) may be used in combination with the coating agent in accordance with an embodiment of the present invention to achieve higher strength.

### [6. Cured product]

A cured product in accordance with an aspect of the present invention is obtained by curing a curable composition in accordance with an aspect of the present invention.

The cured product is preferably highly transparent. In a case where a highly transparent cured product is used for a coating, it is unnecessary to remove the coating in order to check a state of a base material. The highly transparent cured product is therefore suitable to be used to coat a concrete structure.

A haze of the cured product has an upper limit that is preferably 55 or less, more preferably 40 or less, and even more preferably 30 or less. The haze of the cured product has a lower limit that may be 0 or more, or 10 or more. A total light transmittance of the cured product has a lower limit that is preferably 60 or more, more preferably 70 or more, and even more preferably 80 or more. The total light transmittance of the cured product has an upper limit that may be 100 or less, or 95 or less. The haze of the cured product is herein a value obtained by converting a measured value based on JIS K 7136 into a value in a case where a sample has a thickness of 3 mm. The total light transmittance of the cured product is herein a value obtained by converting a measured value based on JIS K 7361-1 into a value in a case where a sample has a thickness of 3 mm.

The cured product preferably has good elongation. In a case where a cured product having good elongation is used for a coating, the cured product can expand and contract in accordance with expansion and contraction of a base material. The cured product having good elongation is therefore suitable to be used to coat a concrete structure.

Elongation of the cured product is herein evaluated by a result of a tensile test. Elongation at break of the cured product has a lower limit that is preferably more than 100%, more preferably 110% or more, even more preferably 130% or more, and particularly preferably 150% or more. The elongation at break of the cured product has an upper limit that can be, for example, 400% or less. A breaking strength of the cured product has a lower limit that is preferably 0.07 MPa or more, more preferably 0.10 MPa or more, and even more preferably 0.15 MPa or more. For a specific method of carrying out the tensile test, see Examples.

### [7. Concrete structure]

An aspect of the present invention is a concrete structure having a surface at least some of which is coated with the above-described cured product or with the above-described coating agent. Examples of the concrete structure include a building, a bridge, elevated structures (such as a railway, a monorail, and a road), and a tunnel. A part coated with the cured product or the coating material can account for, for example, 1% or more, 3% or more, 5% or more, or 10% or more of an entire surface of the concrete structure.

Aspects of the present invention can also be expressed as follows:

### [8. Recap]

<1> A curable composition containing:
   (A) a silyl group-containing (meth)acrylic-based polymer;
   (B) a silyl group-containing polyoxyalkylene-based polymer having a number average molecular weight of 20,000 or more; and
   (C) an aromatic ring-containing plasticizer, wherein

   units derived from CH₂=C(R¹)(COOR²) (where R¹ is a hydrogen atom or a methyl group, and R² is a group having nine or more carbon atoms) account for 5% by weight or less of all structural units of the (A),
   the curable composition contains 60 parts by weight or more of the (C) with respect to 100 total parts by weight of the (A) and the (B), and
   a cured product has a haze of 55 or less, the haze being measured through the following procedure in which:
      1. the curable composition is stretched at 23°C and 50% RH so as to have a thickness of approximately 3 mm, and is cured at 23°C and 50% RH for three days (provided that the curable composition that contains no curing catalyst is cured after 1 part by weight of dibutyltin dilaurate is added with respect to 100 parts by weight of the curable composition);
      2. the curable composition is further cured at 50°C for four days so as to obtain a measured sample;
      3. a haze of the measurement sample is measured in accordance with JIS K 7136; and
      4. the haze is converted into a haze in a 3 mm thickness sample.
<2> The curable composition described in <1>, wherein the (A) has a silyl group at a molecular end or an end portion of a main chain.
<3> The curable composition described in <1> or <2>, wherein the (A) has a silyl group at a molecular end.
<4> The curable composition described in any one of <1> to <3>, wherein the (B) has at least one silyl group represented by the following formula:

   -Si(R³)₃₋ₐ(X)ₐ

   where
   in a case where a single silyl group contains two or more R³ groups, the two or more R³ groups may be identical or different,
   R³ may be different for each silyl group, and represents a hydrocarbon group substituted or unsubstituted and having 1 to 20 carbon atoms (the hydrocarbon group that is substituted may be substituted with a hetero atom-containing group),
   in a case where a single silyl group contains two or more X groups, the two or more X groups may be identical or different,
   X may be different for each silyl group, and represents a hydroxyl group or a hydrolyzable group, and
   a is 1, 2, or 3.
<5> The curable composition described in any one of <1> to <4>, wherein the (C) contains at least one compound selected from the group consisting of aromatic acid ester and aromatic acid amide.
<6> A cured product obtained by curing a curable composition described in any one of <1> to <5>.
<7> The cured product described in <6>, wherein the cured product that has a thickness of 3 mm has a haze of 55 or less.
<8> A coating agent for a concrete structure, containing a curable composition described in any one of <1> to <5>.
<9> A concrete structure having a surface at least some of which is coated with a cured product recited in <6> or <7> or with a coating agent described in <8>.
<10> A method for coating a concrete structure, including applying, to a surface of the concrete structure, a curable composition described in any one of <1> to <5>.
<11> A method for producing a concrete structure, including:
   applying, to a surface of the concrete structure, a curable composition described in any one of <1> to <5>; and
   curing the applied curable composition.
<12> A sealing material containing a curable composition described in any one of <1> to <5>.
<13> An adhesive agent containing a curable composition described in any one of <1> to <5>.

The present invention is not limited to the embodiments, but can be altered variously by a skilled person in the art within the scope of the claims. The present invention also encompasses, in its technical scope, any embodiment derived by appropriately combining technical means disclosed in differing embodiments.

### Examples

### [Synthesis Example 1: Synthesis of (meth)acrylic-based polymer (A-1)]

A (meth)acrylic-based polymer (A-1) in which a methyldimethoxysilyl group was introduced into a molecular end was synthesized by the following procedure.
1. An inside of a reaction container made of stainless steel and having a stirrer was subjected to deoxygenation. In the reaction container, 7.7 g of cuprous bromide and 200 g of butyl acrylate were placed and stirred while being heated.
2. To the reaction container, 90 g of acetonitrile and 17.6 g of diethyl 2,5-dibromoadipate (an initiator) were added and mixed. A temperature of a mixed solution was adjusted to approximately 80°C, and then pentamethyldiethylenetriamine was added so as to initiate a polymerization reaction.
3. To the reaction container, 800 g of butyl acrylate was sequentially added so as to proceed with the polymerization reaction. During polymerization, pentamethyldiethylenetriamine was added as appropriate so as to adjust a polymerization speed. A total amount of pentamethyldiethylenetriamine used in polymerization was 1.4 g. While the polymerization reaction was proceeding, a temperature inside the reaction container was adjusted to approximately 80°C to approximately 90°C.
4. At a point in time when a monomer conversion rate (polymerization reaction rate) reached approximately 95% or more, a volatile component was removed by being subjected to devolatilization under reduced pressure so as to obtain a concentrate of a (meth)acrylic-based polymer.
5. To a polymer concentrate obtained in step 4, 200 g of 1,7-octadiene, 260 g of acetonitrile, and 3.1 g of pentamethyldiethylenetriamine were added.
6. Heating and stirring were carried out for several hours while the temperature inside the reaction container was being adjusted to approximately 80°C to approximately 90°C. Thus, a polymer end and octa-1,7-octadiene were reacted so as to introduce an alkenyl group into the polymer end.
7. Acetonitrile and unreacted octa-1,7-octadiene were removed by being subjected to devolatilization under reduced pressure so as to obtain a concentrate of a polymer having an alkenyl group at its end(s).
8. The concentrate obtained in step 7 was diluted with butyl acetate, and a filter aid, an adsorbent (KYOWAAD 700SEN, available from Kyowa Chemical Industry Co., Ltd.), and hydrotalcite (KYOWAAD 500SH, available from Kyowa Chemical Industry Co., Ltd.) were added.
9. A mixture obtained in step 8 was heated and stirred to approximately 80°C to 100°C, and then a solid component was filtered out. Next, a filtrate was concentrated so as to obtain a semi-purified product of a polymer.
10. To the semi-purified product of the polymer, a thermal stabilizer (SUMILIZER GS, available from SUMITOMO CHEMICAL COMPANY, LIMITED) and an adsorbent (KYOWAAD 700SEN and KYOWAAD 500SH) were added.
11. A system was heated while being subjected to devolatilization under reduced pressure and heating and stirring, and devolatilization under reduced pressure and heating and stirring were continued at approximately 170°C to approximately 200°C for several hours.
12. An adsorbent (KYOWAAD 700SEN and KYOWAAD 500SH) and butyl acetate having a weight approximately 10 times the weight of a crude product of the polymer were added. Heating and stirring were carried out at approximately 170°C to approximately 200°C for another several hours.
13. A treatment solution obtained in step 12 was further diluted with butyl acetate, and then the adsorbent was filtered out. A filtrate was concentrated so as to obtain a polymer having an alkenyl group at its both ends.
14. With 500 g of the polymer obtained in step 13, 7.7 g of methyldimethoxysilane, 2.5 g of methyl orthoformate, and 50 mg of a platinum catalyst were mixed, and a resulting mixture was heated and stirred at approximately 100°C for approximately 1 hour. As the platinum catalyst, an isopropanol solution of a bis(1,3-divinyl-1,1,3,3-tetramethyldisiloxane) platinum complex catalyst was used.
15. A volatile component (such as unreacted methyldimethoxysilane) was distilled off under reduced pressure so as to obtain the (meth)acrylic-based polymer (A-1) in which a methyldimethoxysilyl group was introduced into a molecular end. The (meth)acrylic-based polymer (A-1) had a number average molecular weight of 27,000, a molecular weight distribution of 1.2, and a number of silyl groups introduced per molecule of 2.0.

### [Synthesis Example 2: Synthesis of (meth)acrylic-based polymer (A-2)]

A (meth)acrylic-based polymer (A-2) in which a methyldimethoxysilyl group was introduced into a molecular end was synthesized by the following procedure.
1. An inside of a reaction container made of stainless steel and having a stirrer was subjected to deoxygenation. In the reaction container, 7.7 g of cuprous bromide and 200 g of butyl acrylate were placed and stirred while being heated.
2. To the reaction container, 90 g of acetonitrile and 35.1 g of diethyl 2,5-dibromoadipate (initiator) were added and mixed. A temperature of a mixed solution was adjusted to approximately 80°C, and then pentamethyldiethylenetriamine was added so as to initiate a polymerization reaction.
3. To the reaction container, 800 g of butyl acrylate was sequentially added so as to proceed with the polymerization reaction. During polymerization, pentamethyldiethylenetriamine was added as appropriate so as to adjust a polymerization speed. A total amount of pentamethyldiethylenetriamine used in polymerization was 1.4 g. While the polymerization reaction was proceeding, a temperature inside the reaction container was adjusted to approximately 80°C to approximately 90°C.
4. At a point in time when a monomer conversion rate (polymerization reaction rate) reached approximately 95% or more, a volatile component was removed by being subjected to devolatilization under reduced pressure so as to obtain a concentrate of a (meth)acrylic-based polymer.
5. To a polymer concentrate obtained in step 4, 200 g of 1,7-octadiene, 260 g of acetonitrile, and 6.1 g of pentamethyldiethylenetriamine were added.
6. Heating and stirring were carried out for several hours while the temperature inside the reaction container was being adjusted to approximately 80°C to approximately 90°C. Thus, a polymer end and octa-1,7-octadiene were reacted so as to introduce an alkenyl group into the polymer end.
7. Acetonitrile and unreacted octa-1,7-octadiene were removed by being subjected to devolatilization under reduced pressure so as to obtain a concentrate of a polymer having an alkenyl group at its end(s).
8. The concentrate obtained in step 7 was diluted with butyl acetate, and a filter aid, an adsorbent (KYOWAAD 700SEN, available from Kyowa Chemical Industry Co., Ltd.), and hydrotalcite (KYOWAAD 500SH, available from Kyowa Chemical Industry Co., Ltd.) were added.
9. A mixture obtained in step 8 was heated and stirred to approximately 80°C to 100°C, and then a solid component was filtered out. Next, a filtrate was concentrated so as to obtain a semi-purified product of a polymer.
10. To the semi-purified product of the polymer, a thermal stabilizer (SUMILIZER GS, available from SUMITOMO CHEMICAL COMPANY, LIMITED) and an adsorbent (KYOWAAD 700SEN and KYOWAAD 500SH) were added.
11. A system was heated while being subjected to devolatilization under reduced pressure and heating and stirring, and devolatilization under reduced pressure and heating and stirring were continued at approximately 170°C to approximately 200°C for several hours.
12. An adsorbent (KYOWAAD 700SEN and KYOWAAD 500SH) and butyl acetate having a weight approximately 10 times the weight of a crude product of the polymer were added. Heating and stirring were carried out at approximately 170°C to approximately 200°C for another several hours.
13. A treatment solution obtained in step 12 was further diluted with butyl acetate, and then the adsorbent was filtered out. A filtrate was concentrated so as to obtain a polymer having an alkenyl group at its both ends.
14. With 500 g of the polymer obtained in step 13, 15 g of methyldimethoxysilane, 2.5 g of methyl orthoformate, and 160 mg of a platinum catalyst were mixed, and a resulting mixture was heated and stirred at approximately 100°C for approximately 1 hour. As the platinum catalyst, an isopropanol solution of a bis(1,3-divinyl-1,1,3,3-tetramethyldisiloxane) platinum complex catalyst was used.
15. A volatile component (such as unreacted methyldimethoxysilane) was distilled off under reduced pressure so as to obtain the (meth)acrylic-based polymer (A-2) in which a methyldimethoxysilyl group was introduced into a molecular end. The (meth)acrylic-based polymer (A-2) had a number average molecular weight of 12,000, a molecular weight distribution of 1.2, and a number of silyl groups introduced per molecule of 2.0.

### [Synthesis Example 3: Synthesis of (meth)acrylic-based polymer (A-3)]

A (meth)acrylic-based polymer (A-3) in which a methyldimethoxysilyl group was introduced into a main chain was synthesized by the following procedure.
1. 200 g of isobutyl alcohol was heated to 105°C.
2. A mixed solution of 204 g of butyl acrylate, 45 g of methyl methacrylate, 45 g of 2-ethylhexyl acrylate, 6 g of 3-methylacryloyloxypropyldimethoxymethylsilane, and 1.5 g of azobisisobutyronitrile (a polymerization initiator) was dropped into isobutylalcohol at 105°C and stirred over 4 hours.
3. Postpolymerization was carried out over another 2 hours. Thus, a (meth)acrylic-based polymer (A-3) solution having a solid content concentration of approximately 60% was obtained. A number average molecular weight of the (A-3) as measured by GPC was 9,700.

### [Synthesis Example 4: Synthesis of (meth)acrylic-based polymer (A-4)]

A (meth)acrylic-based polymer (A-4) in which a trimethoxysilyl group was introduced into a main chain was synthesized by the following procedure.
1. 200 g of isobutyl alcohol was heated to 105°C.
2. A mixed solution of 204 g of butyl acrylate, 45 g of methyl methacrylate, 45 g of 2-ethylhexyl acrylate, 6 g of 3-methylacryloyloxypropyltrimethoxysilane, and 1.5 g of azobisisobutyronitrile (a polymerization initiator) was dropped into isobutylalcohol at 105°C and stirred over 4 hours.
3. Postpolymerization was carried out over another 2 hours. Thus, a (meth)acrylic-based polymer (A-4) solution having a solid content concentration of approximately 60% was obtained. A number average molecular weight of the (A-4) as measured by GPC was 9,400.

### [Synthesis Example 5: Synthesis of (meth)acrylic-based polymer (A-5)]

A (meth)acrylic-based polymer (A-5) in which a methyldimethoxysilyl group was introduced into a main chain was synthesized by the following procedure.
1. 200 g of isobutyl alcohol was heated to 105°C.
2. A mixed solution of 204 g of butyl acrylate, 45 g of methyl methacrylate, 36 g of 2-ethylhexyl acrylate, 9 g of stearyl methacrylate, 6 g of 3-methylacryloyloxypropyldimethoxymethylsilane, and 1.5 g of azobisisobutyronitrile (a polymerization initiator) was dropped into isobutylalcohol at 105°C and stirred over 4 hours.
3. Postpolymerization was carried out over another 2 hours. Thus, a (meth)acrylic-based polymer (A-5) solution having a solid content concentration of approximately 60% was obtained. A number average molecular weight of the (A-5) as measured by GPC was 10,600.

The (meth)acrylic-based polymer includes a stearyl methacrylate-derived unit, which corresponds to a (meth)acrylic-based monomer having a long side chain. A ratio of stearyl methacrylate-derived units to all structural units of the (meth)acrylic-based polymer (A-5) is 3% by weight (calculated from a weight ratio of monomers mixed).

### [Synthesis Example 6: Synthesis of polyoxyalkylene-based polymer (B-1)]

A polyoxyalkylene-based polymer (B-1) in which a methyldimethoxysilyl group was introduced into a molecular end was synthesized by the following procedure.
1. Propylene oxide was polymerized so as to obtain polypropylene oxide having a number average molecular weight of approximately 28,500. As an initiator, polyoxypropylene diol was used (molecular weight: approximately 10,000). For a catalyst, a zinc hexacyanocobaltate glyme complex was used. The obtained polypropylene oxide has hydroxyl groups at both molecular ends.
2. 1.2 equivalents of NaOMe with respect to a hydroxyl group at a molecular end of the polypropylene oxide was added as a methanol solution. Methanol was distilled off.
3. Allyl chloride was added so as to convert the hydroxy groups at the molecular ends of the polypropylene oxide into allyl groups. Thus, unpurified allyl-terminated polypropylene oxide was obtained.
4. With 100 parts by weight of the unpurified allyl-terminated polypropylene oxide, 300 parts by weight of n-hexane and 300 parts by weight of water were mixed, and a resulting mixture was stirred. Thereafter, the water was removed by centrifugal separation.
5. With a resulting solution, 300 parts by weight of water was mixed again, and a resulting mixture was stirred. Thereafter, the water was removed by centrifugal separation.
6. Hexane was removed by devolatilization under reduced pressure. Thus, purified allyl-terminated polypropylene oxide was obtained.
7. To 100 parts by weight of purified allyl group-terminated polypropylene oxide, 0.96 parts by weight of methyldimethoxysilane was added, and a resulting mixture was subjected to reaction at 90°C for 2 hours. For a catalyst, an isopropanol solution of a platinum-vinylsiloxane complex (platinum content: 3 wt%) was used. The catalyst had a concentration of 150 ppm in a system. Thus, the polyoxyalkylene-based polymer (B-1) was obtained.

The polyoxyalkylene-based polymer (B-1) is polypropylene oxide into an end of which a methyldimethoxysilyl group is introduced, and had a number average molecular weight of approximately 28,500. As a result of measurement by ¹H-NMR, a rate at which the methyldimethoxysilyl group was introduced at a molecular end of the polyoxyalkylene-based polymer (B-1) was 78%.

### [Synthesis Example 7: Synthesis of polyoxyalkylene-based polymer (B-2)]

A polyoxyalkylene-based polymer (B-2) in which a methyldimethoxysilyl group was introduced into a molecular end was synthesized by the following procedure.
1. Propylene oxide was polymerized so as to obtain polypropylene oxide having a number average molecular weight of approximately 25,500. As an initiator, polyoxypropylene diol was used (molecular weight: approximately 3,000). For a catalyst, a zinc hexacyanocobaltate glyme complex was used. The obtained polypropylene oxide has hydroxyl groups at both molecular ends.
2. By a procedure similar to the procedure in steps 2 to 6 of Synthesis Example 6, purified allyl-terminated polypropylene oxide was obtained.
3. To 100 parts by weight of purified allyl group-terminated polypropylene oxide, 0.90 parts by weight of methyldimethoxysilane was added, and a resulting mixture was subjected to reaction at 90°C for 2 hours. For a catalyst, an isopropanol solution of a platinum-vinylsiloxane complex (platinum content: 3 wt%) was used. The catalyst had a concentration of 150 ppm in a system. Thus, the polyoxyalkylene-based polymer (B-2) was obtained.

The polyoxyalkylene-based polymer (B-2) is polypropylene oxide into an end of which a methyldimethoxysilyl group is introduced, and had a number average molecular weight of approximately 25,500. As a result of measurement by ¹H-NMR, a rate at which the methyldimethoxysilyl group was introduced at a molecular end of the polyoxyalkylene-based polymer (B-2) was 70%.

### [Synthesis Example 8: Synthesis of polyoxyalkylene-based polymer (B-3)]

A polyoxyalkylene-based polymer (B-3) in which a trimethoxysilyl group was introduced into a molecular end was synthesized by the following procedure. 1. In step 7 of Synthesis Example 6, to 100 parts by weight of purified allyl group-terminated polypropylene oxide, 1.5 parts by weight of trimethoxysilane instead of methyldimethoxysilane was added, and a resulting mixture was subjected to reaction at 90°C for 2 hours. For a catalyst, an isopropanol solution of a platinum-vinylsiloxane complex (platinum content: 3 wt%) was used. The catalyst had a concentration of 150 ppm in a system. Thus, the polyoxyalkylene-based polymer (B-3) was obtained.

The polyoxyalkylene-based polymer (B-3) is polypropylene oxide into an end of which a trimethoxysilyl group is introduced, and had a number average molecular weight of approximately 28,500. As a result of measurement by ¹H-NMR, a rate at which the trimethoxysilyl group was introduced at a molecular end of the polyoxyalkylene-based polymer (B-3) was 78%.

### [Synthesis Example 9: Synthesis of polyoxyalkylene-based polymer (P-1)]

A polyoxyalkylene-based polymer (P-1) in which a methyldimethoxysilyl group was introduced into a molecular end was synthesized by the following procedure.
1. Propylene oxide was polymerized so as to obtain polypropylene oxide having a number average molecular weight of approximately 16,400. As an initiator, polyoxypropylene triol was used (molecular weight: approximately 3,000). For a catalyst, a zinc hexacyanocobaltate glyme complex was used. The obtained polypropylene oxide has hydroxyl groups at three molecular ends.
2. By a procedure similar to the procedure in steps 2 to 6 of Synthesis Example 6, purified allyl-terminated polypropylene oxide was obtained.
3. To 100 parts by weight of purified allyl group-terminated polypropylene oxide, 1.80 parts by weight of methyldimethoxysilane was added, and a resulting mixture was subjected to reaction at 90°C for 2 hours. For a catalyst, an isopropanol solution of a platinum-vinylsiloxane complex (platinum content: 3 wt%) was used. The catalyst had a concentration of 150 ppm in a system. Thus, the polyoxyalkylene-based polymer (P-1) was obtained.

The polyoxyalkylene-based polymer (P-1) is polypropylene oxide into an end of which a methyldimethoxysilyl group is introduced, and had a number average molecular weight of approximately 16,400. As a result of measurement by ¹H-NMR, a rate at which the methyldimethoxysilyl group was introduced at a molecular end of the polyoxyalkylene-based polymer (P-1) was 70%. The polyoxyalkylene-based polymer (P-1) had a number average molecular weight of less than 20,000 and thus does not correspond to the component (B) of the present invention.

### [Synthesis Example 10: Synthesis of polyoxyalkylene-based polymer (P-2)]

A polyoxyalkylene-based polymer (P-2) in which a methyldimethoxysilyl group was introduced into a molecular end was synthesized by the following procedure.
1. Polyoxypropylene diol (number average molecular weight: approximately 3,000) was subjected to a jump reaction so as to elongate a molecular chain. Thus, polypropylene oxide having a number average molecular weight of approximately 14,000 was obtained. The obtained polypropylene oxide has hydroxyl groups at both molecular ends.
2. By a procedure similar to the procedure in steps 2 to 6 of Synthesis Example 6, purified allyl-terminated polypropylene oxide was obtained.
3. To 100 parts by weight of purified allyl group-terminated polypropylene oxide, 1.50 parts by weight of methyldimethoxysilane was added, and a resulting mixture was subjected to reaction at 90°C for 2 hours. For a catalyst, an isopropanol solution of a platinum-vinylsiloxane complex (platinum content: 3 wt%) was used. The catalyst had a concentration of 150 ppm in a system. Thus, the polyoxyalkylene-based polymer (P-2) was obtained.

The polyoxyalkylene-based polymer (P-2) is polypropylene oxide into an end of which a methyldimethoxysilyl group is introduced, and had a number average molecular weight of approximately 14,000. As a result of measurement by ¹H-NMR, a rate at which the methyldimethoxysilyl group was introduced at a molecular end of the polyoxyalkylene-based polymer (P-2) was 60%. The polyoxyalkylene-based polymer (P-2) had a number average molecular weight of less than 20,000 and thus does not correspond to the component (B) of the present invention.

### [Materials]

In Examples and Comparative Examples, the following materials were used to prepare a curable composition.
- Plasticizer
   - Diisodecyl phthalate: DIDP (available from J-PLUS Co., Ltd.)
   - Diisononyl phthalate: DINP (available from J-PLUS Co., Ltd.)
   - N-n-butylbenzene sulfonamide: TOPCIZER No. 7 (available from FUJI AMIDE CHEMICAL CO., LTD.)
   - Polypropylene glycol: PPG3000 (available from Mitsui Chemicals, Inc., molecular weight: 3000)
   - Isononyl cyclohexane-1,2-dicarboxylate: HEXAMOLL DINCH (available from BASF)
- Filler
   - Fumed silica: AEROSIL R812 (available from Evonik Industries AG)
- Adhesiveness imparting agent
   - Aminopropyltrimethoxysilane: A-1110 (available from Momentive)
- Curing catalyst
   - Dibutyltin-based curing catalyst: FOMREZ SUL-11C (available from Momentive)
   - Potassium-based curing catalyst: TIB KAT K25 (available from TIB CHEMICAL)
   - Dioctyltin-based curing catalyst: NEOSTANN U-810 (available from NITTO KASEI CO., LTD.)

### [Measurement method]

### [Number average molecular weight]

The following devices were used to measure a number average molecular weight. A measured value is a polystyrene-equivalent molecular weight.
- Solution sending system: HLC-8120GPC (available from Tosoh Corporation)
- Column: TSK-GEL H type (available from Tosoh Corporation)
- Solvent: THF

### [End silyl group introduction rate]

An end silyl group introduction rate was calculated from a result of ¹H-NMR measurement. The following devices were used for the ¹H-NMR measurement.
- Measuring instrument: JNM-LA400 (available from JEOL Ltd.)
- Solvent: CDCl₃

### [Compatibility of curable composition]

A curable composition obtained by kneading a (meth)acrylic-based polymer, a polyoxyalkylene-based polymer, and a plasticizer was placed in a transparent 8 K jar and left to stand at 23°C and 50% RH for three days. Thereafter, an appearance was visually observed so as to evaluate compatibility of components. Specifically, presence/absence of a boundary line produced by separation of some of components of the curable composition was determined. In a case where the boundary line is absent, it can be said that the curable composition has high compatibility.

### [Transparency (haze and total light transmittance) of cured product]

Haze is a degree of haze in plastic and has a greater value as light is further scattered. A total light transmittance is a value obtained by dividing an amount of light having passed through a test sample divided by an amount of light having entered, and has a greater value as transparency is higher.

The haze and the total light transmittance were measured with use of a spectrophotometer for color and turbidity (COH400, available from NIPPON DENSHOKU INDUSTRIES CO., LTD.). The haze is measured in accordance with JIS K 7136. The total light transmittance is measured in accordance with JIS K 7361-1. By correcting measured values, values of the haze and the total light transmittance value are converted into values in a case where a sample has a thickness of 3 mm.

### [Elongation (breaking strength and elongation at break) of cured product]

Elongation of a cured product was evaluated by the following procedure.
1. A dumbbell JIS No. 3 test piece was punched out from a resulting cured product.
2. Autograph (available from SHIMADZU CORPORATION) was used to carry out a tensile test so as to measure a breaking strength (MPa) and elongation at break (%). A tensile speed was 200 mm/min. Measurement was carried out in an environment at 23°C and 50% RH.

### [Examples 1 to 3, 7, and 8, and Comparative Examples 1 to 9]

A curable composition containing no filler and a cured product were prepared by the following procedure. Evaluation results are shown in Table 1.
1. A (meth)acrylic-based polymer, a polyoxyalkylene-based polymer, and a plasticizer were added in respective amounts shown in Table 1, and were kneaded, so that a curable composition was obtained.
2. To the obtained curable composition, an adhesiveness imparting agent and a curing catalyst were added in respective amounts shown in Table 1, and were kneaded.
3. A resultant mixture was formed into a sheet having a thickness of approximately 3 mm, and was cured at 23°C and 50% RH for three days. Thereafter, the mixture was further cured at 50°C for four days. Thus, a cured product was obtained.

As disclosed in Synthesis Examples 3 to 5, the (meth)acrylic-based polymers (A-3) to (A-5) were each obtained as an isobutyl alcohol solution. Isobutyl was removed during preparation of the curable composition. Specifically, the (meth)acrylic-based polymer and the polyoxyalkylene-based polymer were stirred and mixed until being uniform. Thereafter, an evaporator was used to reduce pressure so that isobutyl alcohol was removed. Amounts of the (meth)acrylic-based polymers (A-3) to (A-5) in Table 1 do not include isobutyl alcohol.

### [Examples 4 to 6]

A curable composition containing a filler and a cured product were prepared by the following procedure. Evaluation results are shown in Table 1.
1. A (meth)acrylic-based polymer, a polyoxyalkylene-based polymer, a plasticizer, and a filler were added in respective amounts shown in Table 1, and were kneaded.
2. A resulting mixture was then passed thrice through a three-roll paint mill so as to be further dispersed, so that a curable composition was obtained.
3. A cured product was obtained by a procedure similar to the procedure in steps 2 and 3 of Example 1.

### [Table 1]

**Table 1**

| | | Example | | | | | | | | |
|---|---|---|---|---|---|---|---|---|---|---|
| | | 1 | 2 | 3 | 4 | 5 | 6 | 7 | 8 | 9 |
| Component (A) (Meth)acryisc-based polymer | (Meth)acryiic-based polymer (A-1) Number average molecular weight: 27.000 | 70 | | 70 | 70 | 70 | 50 | | | |
| | (Meth)acrylic-based polymer (A-2) Number average molecular weight: 12.000 | | 70 | | | | | | | |
| | (Meth)acrylic-based polymer (A-3) Number average molecular weight 9.700 | | | | | | | 50 | | |
| | (Meth)acrylic-based polymer (A-4) Number average molecular weight 9,400 | | | | | | | | 50 | |
| | (Meth)acrylic-based polymer (A-5) Number average molecular weight: 10.600 | | | | | | | | | 50 |
| Component (B) Polyoxyalkylene-based polymer | Polyoxyalkylene-based polymer (B-1) Number average molecular weight: 28,500 | 30 | 30 | 30 | 30 | 30 | 50 | 50 | | 50 |
| | Polyoxyalkylene-based polymer (B-2) Number average molecular weight: 25,500 | | | | | | | | | |
| | Polyoxyalkylene-based polymer (B-3) Number average molecular weight: 28,500 | | | | | | | | 50 | |
| Polyoxyalkylene-based polymer not being component (B) | Polyoxyalkylene-based polymer (P-1) Number average molecular weight: 16,400 | | | | | | | | | |
| | Polyoxyalkylene-based polymer (P-2) Number average molecular weight: 14,000 | | | | | | | | | |
| Component (C) Plasticizer | Diisodecyl phthalate | 70 | 70 | | 70 | | | 80 | 80 | 80 |
| | Diisononyl phthalate | | | | | | 70 | | | |
| | N-n-butylbenzene sulfonamide | | | 70 | | 70 | | | | |
| Plasticizer not being component (C) | Polypropylene glycol | | | | | | | | | |
| | Isononyl cyclohexane-1,2-dicarboxylate | | | | | | | | | |
| Filler | Fumed silica | | | | 5 | 5 | 5 | | | |
| Adhesiveness imparting agent | Aminopropyltrimethoxysilane | 2 | 2 | 2 | 2 | 2 | 2 | 2 | 2 | 2 |
| Curing catalyst | Dibutyltin-based curing catalyst | 1 | 1 | 1 | 1 | 1 | | 0.5 | | 0.5 |
| | Potassium-based curing catalyst | | | | | | 1 | | | |
| | Dioctyltin-based curing catalyst | | | | | | | | 0.1 | |
| Curable composition | Appearance (presence/absence of boundary line) | A' | A' | A' | A' | A' | A' | A' | A' | A' |
| Cured product | Transparency | A | A | A | B | B | A | A | A | B |
| | Haze | 26 | 28 | 24 | 34 | 36 | 21 | 47 | 32 | 51 |
| | Total light transmittance | 82 | 82 | 88 | 83 | 66 | 82 | 74 | 84 | 76 |
| | Breaking strength (MPa) | 0.09 | 0.12 | 0.09 | 0.24 | 0.23 | - | 0.12 | 0.14 | 0.21 |
| | Elongation at break (%) | 110 | 110 | 110 | 220 | 190 | - | 240 | 180 | 150 |

| | | | | | | | | | | |
|---|---|---|---|---|---|---|---|---|---|---|
| Criteria for evacuating transparency of cured product A: haze is less than 30 B: haze is 30-55 C: haze is more than 55 "A" is an abbreviation of "Absent". | | | | | | | | | | |

**Table 1 cont.**

| | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| Component (A) (Meth)acrylic-based polymer | (Methyacrylic-based polymer (A-1) Number average molecular weight: 27.000 | 70 | 50 | 50 | 50 | 50 | | 70 | 50 | | |
| | (Meth)acrylic-based polymer (A-2) Number average molecular weight: 12,000 | | | | | | 70 | | | | |
| | (Meth)acrylic-based polymer (A-3) Number average molecular weight: 9,700 | | | | | | | | | 50 | |
| | (Meth)acrylic-based polymer (A-4) Number average molecular weight: 9.400 | | | | | | | | | | |
| | (Meth)acrylic-based polymer (A-5) Number average molecular weight: 10,600 | | | | | | | | | | 50 |
| Component (B) Polyoxyalkylene-based polymer | Polyoxyalkylene-based polymer (B-1) Number average molecular weight: 28,500 | 30 | 50 | | | | | 30 | 50 | 50 | 50 |
| | Polyoxyalkylene-based polymer (B-2) Number average molecular weight: 25,500 | | | 50 | | | | | | | |
| | Polyoxyalkylene-based polymer (B-3) Number average molecular weight: 28,500 | | | | | | | | | | |
| Polyoxyalkylene-based polymer not being component (8) | Polyoxyalkytene-based polymer (P-1) Number average molecular weight: 16,400 | | | | 50 | | | | | | |
| | Polyoxyalkytene-based polymer (P-2) Number average molecular weight: 14.000 | | | | | 50 | 30 | | | | |
| Component (C) Plasticizer | Diisodecyl phthalate | 50 | 50 | 50 | 50 | 50 | 70 | | | 10 | 10 |
| | Diisononyl phthalate | | | | | | | | | | |
| | N-n-butvlbenzene suffonamide | | | | | | | | | | |
| Plasticizer not being component (C) | Palypropylene glycol | | | | | | | 70 | | | |
| | Isononyl cyclohexane-1,2-dicarboxylate | | | | | | | | 70 | | |
| Filler | Fumed silica | | | | | | | | | | |
| Adhesiveness imparting agent | Aminopropyltrimethoxysilane | 2 | 2 | 2 | 2 | 2 | 2 | 2 | 2 | 2 | 2 |
| Curing catalyst | Dibutyltin-based curing catalyst | 1 | 1 | 1 | 1 | 1 | 1 | 1 | 1 | 0.5 | 0.5 |
| | Potassium-based curing catalyst | | | | | | | | | | |
| | Dioctyltin-based curing catalyst | | | | | | | | | | |
| Curable composition | Appearance (presence/absence of boundary line) | A' | P' | P' | A' | A' | A' | P' | P' | P' | A' |
| Cured product | Transparency | C | C | C | B | C | A | C | C | C | C |
| | Haze | 65 | 88 | 80 | 33 | 58 | 23 | 91 | 84 | 94 | 93 |
| | Total light transmittance | 87 | 88 | 88 | 82 | 79 | as | 83 | 88 | 49 | 47 |
| | Breaking strength (MPa) | 0.13 | 0.20 | 0.17 | 0.14 | 0.09 | 0.03 | 0.19 | 0.16 | 0.49 | 0.35 |
| | Elongation at break (%) | 130 | 200 | 200 | 80 | 100 | 40 | 250 | 200 | 270 | 225 |

| | | | | | | | | | | | |
|---|---|---|---|---|---|---|---|---|---|---|---|
| Criteria for evaluating transparency of cured product A: haze is less than 30 B: haze is 30-55 C: haze is more than 55 ""A" is an abbreviation of 'Absent', and "P* is an abbreviation of "Present". | | | | | | | | | | | |

### [Results]

The cured products in accordance with Examples 1 to 9 each contained all the components (A), (B), and (C). The cured products in accordance with Examples 1 to 9 each also contained the component (C) in an amount of 60 parts by weight or more, assuming that a total of the components (A) and (B) is 100 parts by weight. As a result, the cured products in accordance with Examples 1 to 9 had high transparency (in particular, had low haze).

A comparison between (a) Examples 1 to 3 and (b) Examples 4 and 5 has shown that transparency of the cured product tends to slightly decrease by mixing of the filler. A comparison between (a) Examples 4 and 5 and (b) Example 6 has shown that, even in a case where the filler is mixed, use of the potassium-based curing catalyst allows transparency of the cured product to be kept high.

In Examples 7 to 9, the (meth)acrylic-based polymers (A-3) to (A-5) in each of which a silyl group was randomly introduced into a main chain were used as the component (A). In Examples 7 to 9, a mixture of the components (A) and (B) was observed to be whitish, but was made transparent by further adding the component (C). In this case, the component (C) was added in an amount of 60 parts by weight or more (80 parts by weight), assuming that the total of the components (A) and (B) is 100 parts by weight. The cured products in accordance with Examples 7 to 9 ultimately had transparency higher than or equivalent to the transparency in the other Examples.

The cured products in accordance with Comparative Examples 1 to 3 each contained the component (C) in an amount of less than 60 parts by weight, assuming that the total of the components (A) and (B) is 100 parts by weight. The cured products in accordance with Comparative Examples 1 to 3 tended to be inferior in transparency.

The polyoxyalkylene-based polymer of each of the cured products in accordance with Comparative Examples 4 to 6 had a number average molecular weight of less than 20,000. Thus, none of the cured products in accordance with Comparative Examples 4 to 6 contained the component (B). The cured products in accordance with Comparative Examples 4 to 6 tended to have insufficient elongation.

The cured products in accordance with Comparative Examples 7 and 8 each contained only the plasticizer containing no aromatic ring, and thus did not contain the component (C). The cured products in accordance with Comparative Examples 7 and 8 tended to be inferior in transparency.

The component (C) in each of Comparative Examples 9 and 10 was contained in an amount of less than 60 parts by weight (10 parts by weight), assuming that the total of the components (A) and (B) is 100 parts by weight. As a result, the cured products in accordance with Comparative Examples 9 and 10 were inferior in transparency to the cured product in accordance with Example 7.

A comparison between (a) Comparative Example 1 and (b) Comparative Examples 2 and 3 shows that an appearance (presence/absence of a boundary line) of the curable composition is not correlated with transparency of the cured product. That is, it is found that a compatibility evaluation result disclosed in Patent Literature 1 is irrelevant to transparency of a cured product.

As disclosed in Example 9, it is found that a cured product having excellent transparency can be obtained by appropriately combining, with the components (B) and (C), even the component (A) containing a small amount of units derived from a (meth)acrylic-based monomer having a long side chain. However, from the viewpoint of material cost, the (meth)acrylic-based monomer having a long side chain is preferably used in a not too large amount (e.g., 5% by weight or less).

### Industrial Applicability

The present invention can be used to, for example, coat a concrete structure.

## Claims

1. A curable composition comprising:
(A) a silyl group-containing (meth)acrylic-based polymer;
(B) a silyl group-containing polyoxyalkylene-based polymer having a number average molecular weight of 20,000 or more; and
(C) an aromatic ring-containing plasticizer, wherein
units derived from CH₂=C(R¹)(COOR²) (where R¹ is a hydrogen atom or a methyl group, and R² is a group having nine or more carbon atoms) account for 5% by weight or less of all structural units of the (A),
the curable composition contains 60 parts by weight or more of the (C) with respect to 100 total parts by weight of the (A) and the (B), and
a cured product has a haze of 55 or less, the haze being measured through the following procedure in which:
1. the curable composition is stretched at 23°C and 50% RH so as to have a thickness of approximately 3 mm, and is cured at 23°C and 50% RH for three days (provided that the curable composition that contains no curing catalyst is cured after 1 part by weight of dibutyltin dilaurate is added with respect to 100 parts by weight of the curable composition);
2. the curable composition is further cured at 50°C for four days so as to obtain a measured sample;
3. a haze of the measurement sample is measured in accordance with JIS K 7136; and
4. the haze is converted into a haze in a 3 mm thickness sample.

2. The curable composition as set forth in claim 1, wherein the (A) has a silyl group at a molecular end or an end portion of a main chain.

3. The curable composition as set forth in claim 1 or 2, wherein the (A) has a silyl group at a molecular end.

4. The curable composition as set forth in any one of claims 1 to 3, wherein the (B) has at least one silyl group represented by the following formula:
-Si(R³)₃₋ₐ(X)ₐ
where
in a case where a single silyl group contains two or more R³ groups, the two or more R³ groups may be identical or different,
R³ may be different for each silyl group, and represents a hydrocarbon group substituted or unsubstituted and having 1 to 20 carbon atoms (the hydrocarbon group that is substituted may be substituted with a hetero atom-containing group),
in a case where a single silyl group contains two or more X groups, the two or more X groups may be identical or different,
X may be different for each silyl group, and represents a hydroxyl group or a hydrolyzable group, and
a is 1, 2, or 3.

5. The curable composition as set forth in any one of claims 1 to 4, wherein the (C) contains at least one compound selected from the group consisting of aromatic acid ester and aromatic acid amide.

6. A cured product obtained by curing a curable composition recited in any one of claims 1 to 5.

7. The cured product as set forth in claim 6, wherein the cured product that has a thickness of 3 mm has a haze of 55 or less.

8. A coating agent for a concrete structure, comprising a curable composition recited in any one of claims 1 to 5.

9. A concrete structure having a surface at least some of which is coated with a cured product recited in claim 6 or 7 or with a coating agent recited in claim 8.

10. A method for coating a concrete structure, comprising applying, to a surface of the concrete structure, a curable composition recited in any one of claims 1 to 5.

11. A method for producing a concrete structure, comprising:
applying, to a surface of the concrete structure, a curable composition recited in any one of claims 1 to 5; and
curing the applied curable composition.

12. A sealing material comprising a curable composition recited in any one of claims 1 to 5.

13. An adhesive agent comprising a curable composition recited in any one of claims 1 to 5.
